# EUROPEAN PATENT SPECIFICATION

(11) **EP 2 508 418 B1**
(45) Date of publication and mention of the grant of the patent: **22.10.2014**
(21) Application number: 10832928.5
(22) Date of filing: 01.09.2010
(51) Int. Cl.: B63J 3/02, B63H 21/14, B63H 21/17, B63H 21/20

(54) **EXHAUST HEAT RECOVERY-TYPE SHIP PROPULSION DEVICE, SHIP EQUIPPED WITH SAME, AND CONTROL METHOD FOR EXHAUST HEAT RECOVERY-TYPE SHIP PROPULSION DEVICE**
SCHIFFSANTRIEBSVORRICHTUNG MIT ABGASWÄRMERÜCKGEWINNUNG, DAMIT AUSGESTATTETES SCHIFF SOWIE STEUERVERFAHREN FÜR DIE SCHIFFSANTRIEBSVORRICHTUNG MIT ABGASWÄRMERÜCKGEWINNUNG
DISPOSITIF DE PROPULSION DE NAVIRE DU TYPE À RÉCUPÉRATION DU REJET THERMIQUE, NAVIRE ÉQUIPÉ DUDIT DISPOSITIF, ET PROCÉDÉ DE COMMANDE POUR DISPOSITIF DE PROPULSION DE NAVIRE DU TYPE À RÉCUPÉRATION DU REJET THERMIQUE

(30) Priority: 30.11.2009 JP 2009272767
(43) Date of publication of application: 10.10.2012
(73) Proprietor: Mitsubishi Heavy Industries, Ltd., Tokyo 108-8215 (JP)
(72) Inventor: OSAFUNE, Shinnosuke, Tokyo 108-8215 (JP); MURATA, Satoru, Tokyo 108-8215 (JP); ICHIKI, Yoshihiro, Tokyo 108-8215 (JP)
(74) Representative: HOFFMANN EITLE
(86) International application number: PCT/JP2010/064876
(87) International publication number: WO 2011/065081

(56) References cited:
- EP-A1- 0 235 390
- WO-A-2007/124968
- JP-A- 2 061 307
- JP-A- 2 061 307
- JP-A- 57 151 495
- JP-A- 57 151 495
- JP-A- 62 205 896
- JP-A- 2007 001 339
- JP-A- 2007 001 339
- JP-A- 2009 535 258

## Description

### {Technical Field}

The present invention relates to an exhaust-heat recovery type ship propulsion apparatus provided with a generator that generates power by recovering exhaust heat from a main engine for ship propulsion and a shaft generator motor that boosts the main engine; to a ship provided with the same; and to a control method for the exhaust-heat recovery type ship propulsion apparatus.

### {Background Art}

In a known ship exhaust-heat recovery system in the related art, an exhaust-heat recovery type ship propulsion apparatus generates power by driving a steam turbine with steam generated by utilizing exhaust gas from a main engine. In addition, a shaft generator motor that generates power by being driven by a main engine and that boosts the main engine by utilizing inboard surplus power has been known. A system provided with these has been proposed as an energy saving technology for ships, and is disclosed, for example, in Patent Literature 1. Patent Literature 1 discloses an invention in which power is generated by driving a steam turbine by utilizing exhaust gas from a main engine, and the generated power is utilized in a generator motor.

### {Citation List}

### {Patent Literature}

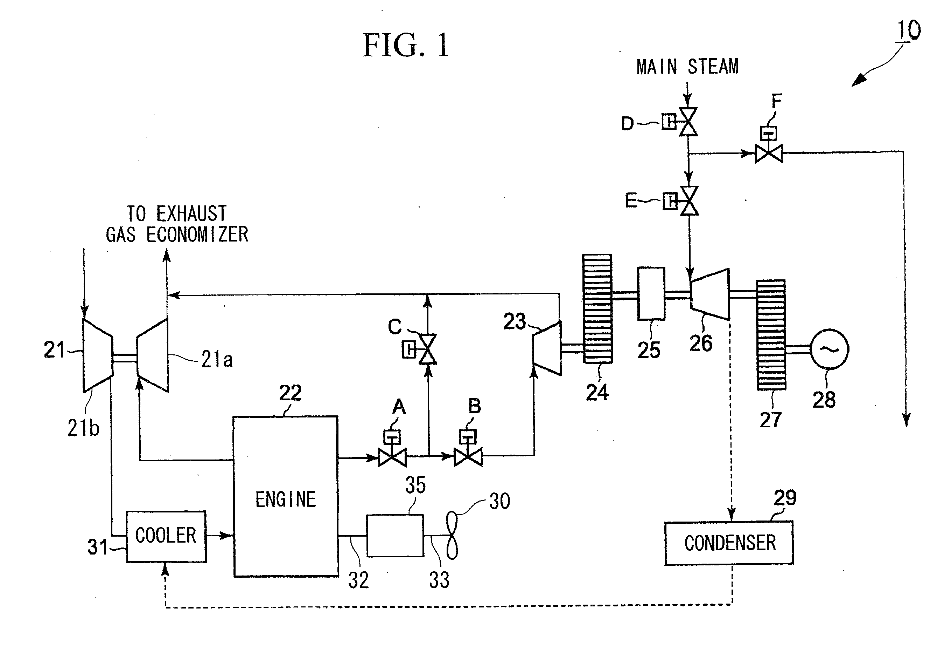

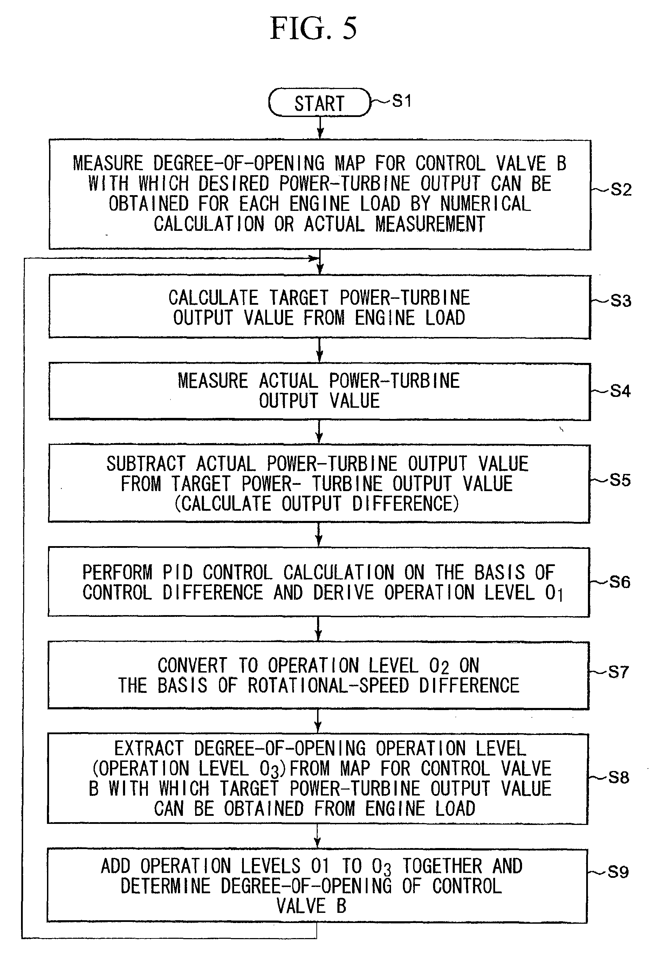

{PTL 1} Japanese Unexamined Patent Application, Publication No. 2007-1339 (see Fig. 1 and Fig. 5(e)), or JP 2007001339 which is considered to be the closest prior art.

### {Summary of Invention}

### {Technical Problem}

However, power generated by a steam turbine, etc. sometimes exceeds inboard required power, generating surplus power. Such a phenomenon occurs when an inboard load abruptly decreases (for example, when the power supply to a refrigerated container in a ship is halted). It is known that when surplus power is generated in this way, fluctuations in the power frequency may increase due to an imbalance between inboard required power and generated power.

In addition, fluctuations in the power frequency due to the imbalance between inboard required power and generated power may similarly increase in a system provided with a power turbine (gas turbine) that generates power by being driven by exhaust gas from a main engine.

In this way, in an exhaust-heat recovery system provided with a steam turbine and a power turbine, the amount of steam to be supplied to the steam turbine and the amount of exhaust gas to be supplied to the power turbine are generally controlled by feedback control, which uses a power generation command value based on inboard required power and the present power generation level; therefore, a response delay cannot be neglected. Therefore, there is a demand for increasing the responsiveness with respect to the inboard required power to suppress fluctuations in the power frequency.

On the other hand, because the shaft generator motor is driven as a motor by inboard surplus power, an assist torque of the shaft generator motor acts as a disturbance, and a ship that should navigate at a fixed speed experiences an abrupt acceleration.

The present invention has been conceived in light of such circumstances, and an object thereof is to provide an exhaust-heat recovery type ship propulsion apparatus that is capable of reducing inboard surplus power as much as possible and of suppressing ship speed fluctuations; a ship provided with the same; and a control method for the exhaust-heat recovery type ship propulsion apparatus.

### {Solution to Problem}

In order to solve the above-described problems, an exhaust-heat recovery type ship propulsion apparatus of the present invention and a ship provided with the same employ the following solutions.

An exhaust-heat recovery type ship propulsion apparatus according a first aspect of the present invention is an exhaust-heat recovery type ship propulsion apparatus provided with a main engine that drives a propulsion propeller of a ship; a power turbine that is driven by exhaust gas from the main engine; a steam turbine that is driven by steam generated by the exhaust gas from the main engine; a turbine generator that is driven by the power turbine and the steam turbine; and a shaft-generator motor that is provided between the main engine and the propulsion propeller and that is capable of a motor operation in which inboard surplus power is utilized to boost the main engine, as well as a power generation operation in which the shaft generator motor is driven by the main engine, thus generating power, wherein the exhaust-heat recovery type ship propulsion apparatus includes a power-turbine control unit that calculates, on the basis of inboard required power and a load on the main engine, a degree-of-opening for a power-turbine control valve that controls a flow volume of the exhaust gas to be supplied to the power turbine from the main engine as a feedforward degree-of-opening and that outputs the feedforward degree-of-opening to the power-turbine control valve; and/or a steam turbine control unit that calculates, on the basis of the inboard required power and the load on the main engine, a degree-of-opening for a steam-turbine control valve that controls a flow volume of steam to be supplied to the steam turbine as a feedforward degree-of-opening and that outputs the feedforward degree-of-opening to the steam-turbine control valve; and a fuel-injection-amount control unit that calculates a fuel injection amount for the main engine that corresponds to an output of the shaft generator motor during the motor operation as a converted fuel-injection amount and that subtracts the converted fuel-injection amount from the fuel injection amount to be supplied to the main engine.

Because the degree-of-opening of the power-turbine control valve is subjected to feedforward control on the basis of the inboard required power, the responsiveness of the power turbine to the inboard required power is improved. Therefore, inboard surplus power can be reduced as much as possible.

Because the fuel injection amount for the main engine that corresponds to the output of the shaft generator motor during the motor operation is calculated as the converted fuel injection amount and is subtracted from the fuel injection amount to be supplied to the main engine, fluctuations in propeller rotational speed can be suppressed even if the shaft generator motor boosts the main engine due to the surplus power.

In addition, a ship according to a second aspect of the present invention is provided with the exhaust-heat recovery type ship propulsion apparatus described above.

Because the above-described exhaust-heat recovery type ship propulsion apparatus is provided, it is possible to provide a ship that can reduce the inboard surplus power, that can suppress power frequency fluctuations, and that can navigate at a desired fixed speed.

In addition, a control method for the exhaust-heat recovery type ship propulsion apparatus according to a third aspect of the present invention is a control method for an exhaust-heat recovery type ship propulsion apparatus provided with a main engine that drives a propulsion propeller of a ship; a power turbine that is driven by exhaust gas from the main engine; a steam turbine that is driven by steam generated by the exhaust gas from the main engine; a turbine generator that is driven by the power turbine and the steam turbine; and a shaft-generator motor that is provided between the main engine and the propulsion propeller and that is capable of a motor operation in which inboard surplus power is utilized to boost the main engine, as well as a power generation operation in which the shaft-generator motor is driven by the main engine, thus generating power, wherein, on the basis of inboard required power and a load on the main engine, a degree-of-opening for a power-turbine control valve that controls a flow volume of the exhaust gas to be supplied to the power turbine from the main engine is calculated as a feedforward degree-of-opening, and the feedforward degree-of-opening is output to the power-turbine control valve; and/or, on the basis of the inboard required power and the load on the main engine, a degree-of-opening for a steam-turbine control valve that controls a flow volume of steam to be supplied to the steam turbine is calculated as a feedforward degree-of-opening, and the feedforward degree-of-opening is output to the steam-turbine control valve; and a fuel injection amount for the main engine that corresponds to an output of the shaft generator motor during the motor operation is calculated as a converted fuel-injection amount, and the converted fuel-injection amount is subtracted from the fuel injection amount to be supplied to the main engine.

### {Advantageous Effects of Invention}

With the present invention, because the degree-of-opening of the power-turbine control valve is subjected to feedforward control on the basis of the inboard required power, and thus, the responsiveness of the power turbine to the inboard required power can be improved, inboard surplus power can be reduced as much as possible.

In addition, because the degree-of-opening of the steam-turbine control valve is subjected to feedforward control on the basis of the inboard required power, and thus, the responsiveness of the steam turbine to the inboard required power can be improved, the inboard surplus power can be reduced as much as possible.

Furthermore, because the fuel injection amount is corrected by using the fuel injection amount (converted fuel injection amount) for the main engine that corresponds to the output of the shaft generator motor during the motor operation, ship speed fluctuations can be suppressed even when the shaft generator motor boosts the main engine due to the surplus power.

### {Brief Description of Drawings}

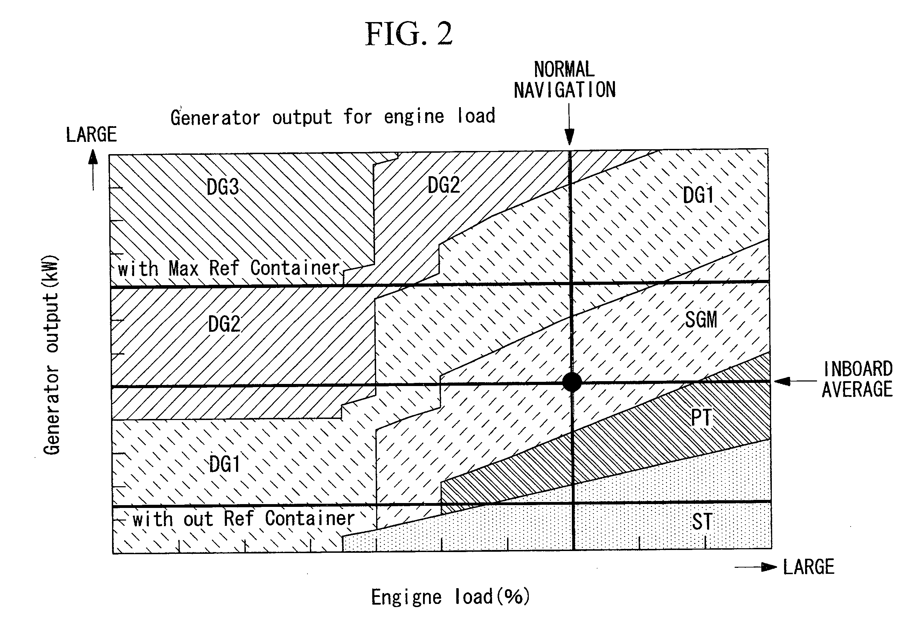

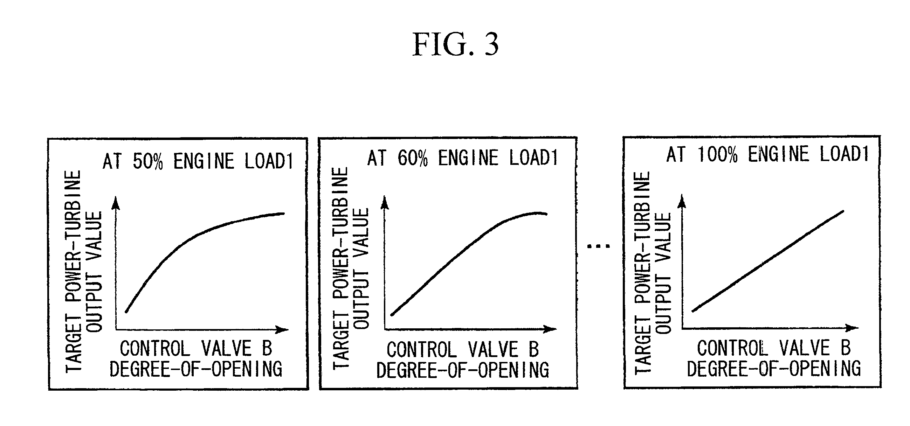

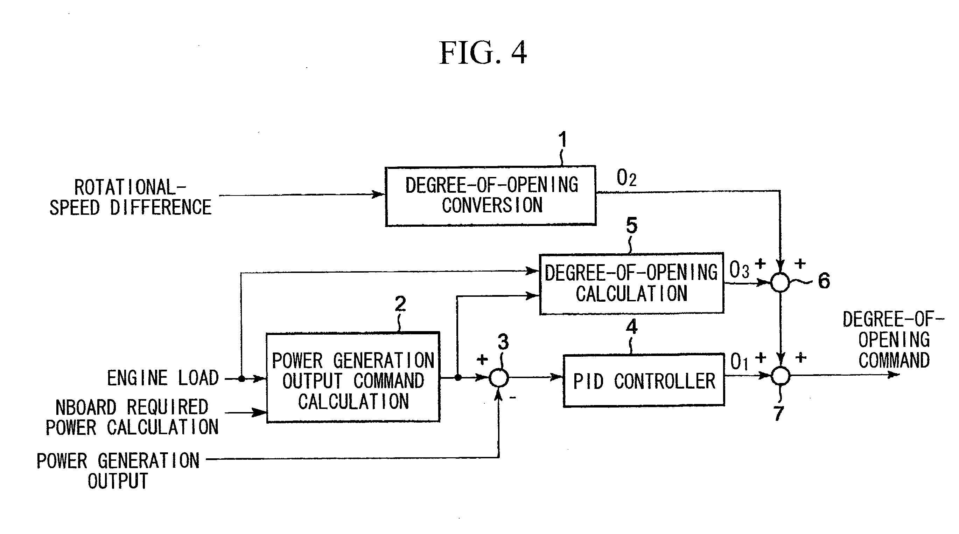

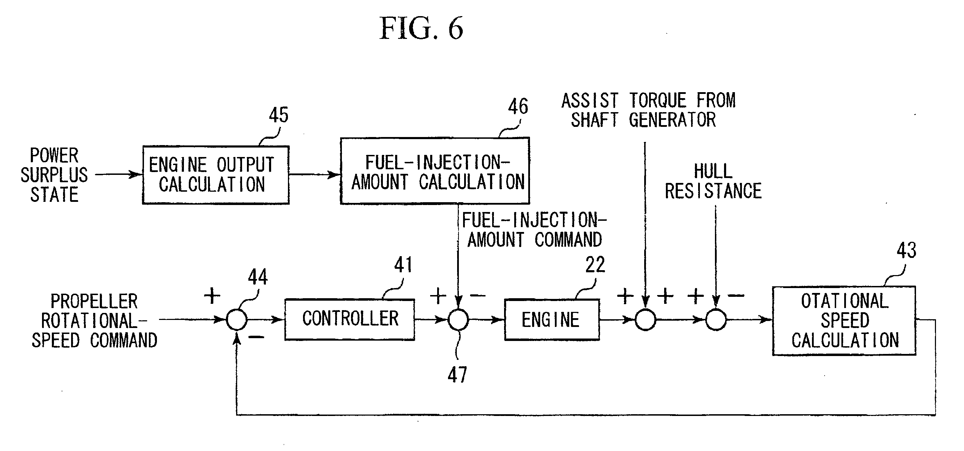

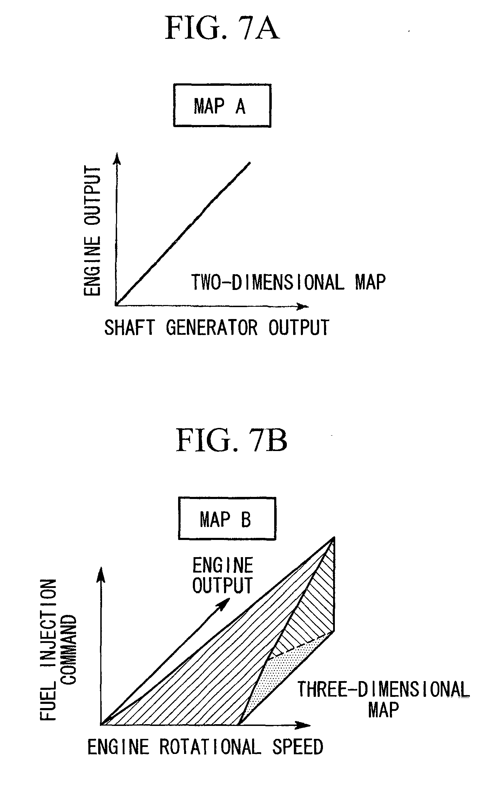

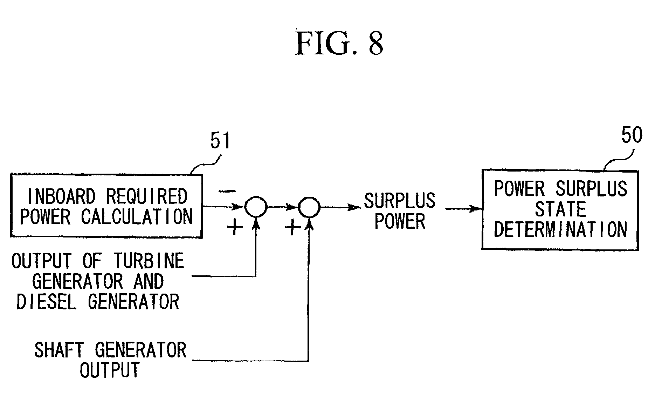

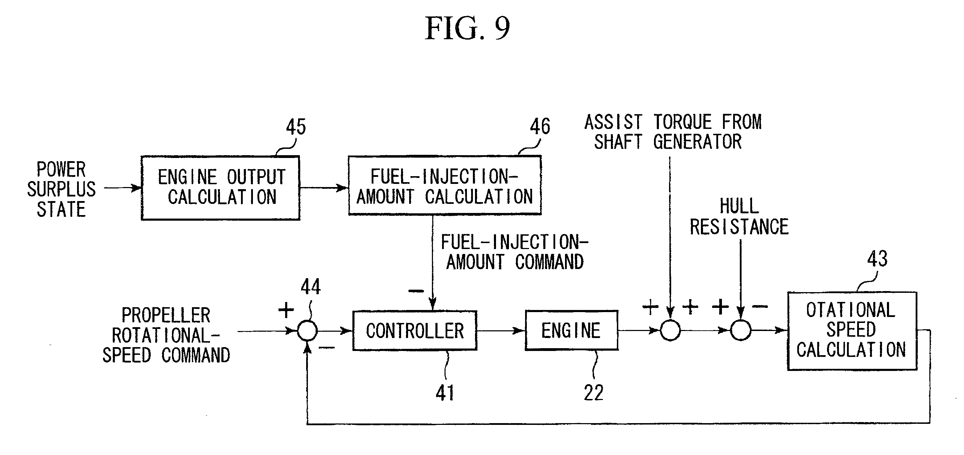

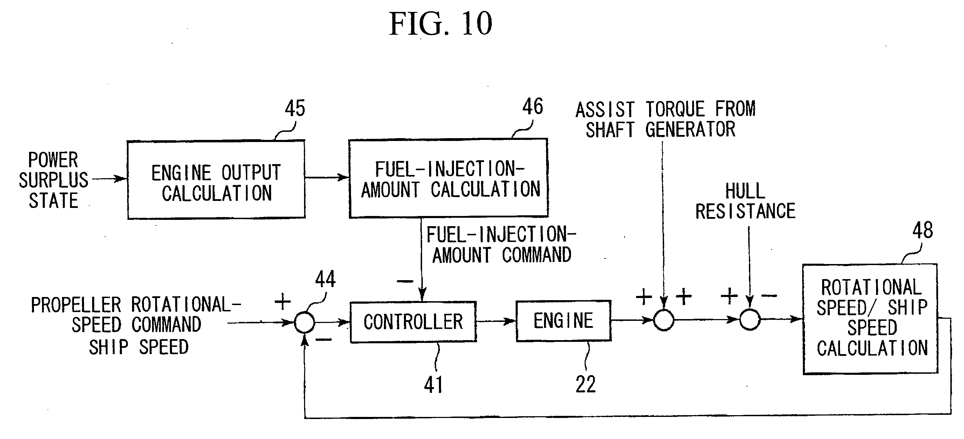

{Fig. 1} Fig. 1 is a schematic configuration diagram of an exhaust-heat recovery type ship propulsion apparatus of the present invention.
{Fig. 2} Fig. 2 is a graph showing load sharing among a steam turbine, a power turbine, a shaft generator motor, and power generating diesel engine in relation to inboard required power and main engine load percentage.
{Fig. 3} Fig. 3 is a graph showing the relationship between target power-turbine output value and a degree-of-opening of an exhaust-gas-amount adjusting valve (degree-of-opening of control valve B) for each main-engine load percentage.
{Fig. 4} Fig. 4 is a control block diagram for realizing degree-of-opening control for the exhaust-gas-amount adjusting valve of a power turbine.
{Fig. 5} Fig. 5 is a flowchart showing degree-of-opening control for the exhaust-gas-amount adjusting valve of the power turbine.
{Fig. 6} Fig. 6 is a control block diagram for realizing fuel-injection-amount control for the main engine of a ship.
{Fig. 7A} Fig. 7A is a graph showing the relationship between shaft-generator motor output and corresponding main engine output (engine output).
{Fig. 7B} Fig. 7B is a graph showing the relationship among main engine output (engine output), main engine rotational speed (engine rotational speed), and fuel-injection-amount command.
{Fig. 8} Fig. 8 is a control block diagram for determining a power-surplus state.
{Fig. 9} Fig. 9 is a control block diagram showing a case in which an electronically controlled engine is employed in Fig. 6.
{Fig. 10} Fig. 10 is a control block diagram showing a case in which ship speed is directly controlled in Fig. 9.

### {Description of Embodiments}

An embodiment of an exhaust-heat recovery type ship propulsion apparatus according to the present invention and a ship provided with the same will be described below with reference to the drawings.

Fig. 1 shows the schematic configuration of an exhaust-heat recovery type ship propulsion apparatus provided in a ship.

An exhaust-heat recovery type ship propulsion apparatus 1 is provided with a main engine 22 that propels the ship, an exhaust turbine supercharger 21 that compresses air to be supplied to the main engine 22, a power turbine (gas turbine) 23, a steam turbine 26, and a turbine generator 28 that is connected to the power turbine 23 and the steam turbine 26. Operations of the main engine 22, the power turbine 23, the steam turbine 26, and the turbine generator 28 are controlled by a control unit (not shown).

The main engine 22 is, for example, a low-speed two-cycle diesel engine. An output shaft 32 of the main engine 22 is connected to a shaft generator motor 35, and a screw propeller 30 is attached to the shaft generator motor 35 via a propeller shaft 33.

In addition, the main engine 22 is provided with a plurality of cylinders that are constituted of cylinder liners (not shown), cylinder covers (not shown), etc., and a piston (not shown) that is coupled with a crankshaft is disposed in each cylinder. Furthermore, an exhaust port (not shown) of each cylinder is connected to an exhaust manifold (not shown), and the exhaust manifold is connected to a turbine portion 21a of the exhaust turbine supercharger 21 at an inlet side thereof and is also connected to the power turbine 23 at an inlet side thereof. On the other hand, an air-supply port (not shown) of each cylinder is connected to an air-supply manifold (not shown), and the air-supply manifold is connected to a compressor portion 21b of the exhaust turbine supercharger 21 via an air cooler 31 which serves as an intercooler.

The shaft generator motor 35 is capable of performing a power generating operation in which power is generated by being driven by the main engine 22 while performing a motor operation in which inboard surplus power is utilized to boost the main engine 22. The operation of the shaft generator motor 35 is controlled by the control unit (not shown).

An exhaust-gas economizer is provided downstream of the turbine portion 21a of the exhaust turbine supercharger 21. Exhaust gas from the exhaust turbine supercharger 21 and exhaust gas from the power turbine 23 are introduced into the exhaust-gas economizer. At a heat-exchanging portion of the exhaust-gas economizer, water supplied from a water supply pipe (not shown) is heated/evaporated by the heat of the introduced exhaust gas, and superheated steam is generated. The superheated steam generated at the heat-exchanging portion is introduced into the steam turbine 26 as main steam, and, additionally, the steam that has performed work at the steam turbine 26 is guided to a condenser 29 and is returned to water. The water that has been condensed at the condenser 29 cools wall portions of an air cooler 31 and the main engine 22, becomes heated, and is subsequently supplied to the exhaust-gas economizer again.

The power turbine 23 is rotationally driven by the exhaust gas extracted from the exhaust manifold of the main engine 22, and, additionally, the steam turbine 26 is rotationally driven by the steam generated in and supplied from the exhaust-gas economizer.

The power turbine 23 and the steam turbine 26 are coupled in series and drive the turbine generator 28. An output shaft of the steam turbine 26 is connected to the turbine generator 25 via a reduction gear 27 and a coupling (not shown), and, additionally, an output shaft of the power turbine 23 is linked to an input shaft of the steam turbine 26 via a reduction gear 24 and a clutch 25. A clutch that is engaged and disengaged at a predetermined rotational speed is employed as the clutch 25, and, for example, an SSS (Synchro-Self-Shifting) clutch is suitably employed.

An exhaust-gas-amount adjusting valve (power-turbine control valve) B, which controls the amount of gas to be introduced into the power turbine 23, and an emergency shutdown valve A for halting in an emergency, which blocks the supply of the exhaust gas to the power turbine 23 in the event of emergency, are provided on the upstream side of an exhaust gas flow in the power turbine 23. In addition, a bypass valve C for bypassing the exhaust gas flow to the exhaust-gas-amount adjusting valve B is provided.

A steam-amount adjusting valve (steam-turbine control valve) E, which controls the amount of steam to be introduced into the steam turbine 26, and an emergency shutdown valve D for halting in an emergency, which blocks the supply of steam to the steam turbine 26 in the event of emergency, are provided on the upstream side of a steam flow in the steam turbine 26. In addition, a bypass valve F for bypassing the steam flow to the steam-amount adjusting valve E is provided.

As described later, degrees of opening of the above-described exhaust-gas-amount adjusting valve B and the steam-amount adjusting valve E are individually controlled by a control unit.

As described above, the turbine generator 28 recovers exhaust energy of the exhaust gas (combustion gas) from the main engine 22 and is driven with this energy serving as a motive force.

Power generated by the turbine generator 28 is connected to an inboard system via a power cable (not shown). In addition, power generated by the shaft generator motor 35 is also connected to the inboard system via a power cable (not shown). Furthermore, a ship of this embodiment is provided with three power-generation diesel engines DG1, DG2, and DG3 as auxiliary generators, and generated power therefrom is also connected to the inboard system via power cables (not shown).

The inboard required power is calculated at the control unit (not shown) based on current values and voltage values obtained with an ammeter and a voltmeter connected to the inboard system.

Load sharing among the steam turbine 26, the power turbine 23, the shaft generator motor 35, and the three power-generation diesel engines DG1, DG2, and DG3 that generate power is determined on the basis of the inboard required power and the load of the main engine 22, as in Fig. 2.

In Fig. 2, the horizontal axis indicates load percentage (%) of the main engine 22 and the vertical axis indicates the inboard required power (kW). Note that values on the vertical axis and the horizontal axis are appropriately determined depending on the type, size, etc. of the ship. The example shown in the figure is for a container ship, and inboard required power when power is not supplied to refrigerated containers (without Ref Container) and inboard required power when power is supplied to all of refrigerated containers (with Max Ref Container) are shown.

When the load percentage for the main engine is small, it is operated so as to satisfy the inboard required power only with the three power-generation diesel engines DG1, DG2, and DG3, because sufficient exhaust energy to operate the steam turbine (ST) and the power turbine (PT) cannot be obtained. The individual power-generation diesel engines D1, D2, and D3 are started up starting from the first power-generation diesel engine DG1, the second power-generation diesel engine DG2, and the third power-generation diesel engine DG3, in this order, as the inboard required power increases.

When the main-engine load percentage reaches or exceeds a predetermined value, it becomes possible to obtain an amount of exhaust-gas heat that can achieve a steam amount enabling startup of the steam turbine (ST), and thus, the steam turbine (ST) is started up first. As the main-engine load percentage increases, the shaft generator motor (SGM) is started up, and then, the power turbine (PT) is started up.

The steam turbine (ST), the shaft generator motor (SGM), and the power turbine (PT) are sequentially started up as the main-engine load percentage for the main engine increases, whereupon load sharing for the power-generation diesel engines is sequentially decreased starting from the third power-generation diesel engine DG3, the second power-generation diesel engine DG2, and then, the first power-generation diesel engine DG1.

As shown in the figure, it is understood that, at a main-engine load percentage during normal navigation with an average inboard required power, power is generated with the steam turbine (ST) 26, the power turbine (PT) 23, and the shaft generator motor (SGM) 35, and power generation by the power-generation diesel engines DG1, DG2, and DG3 is not necessary. In addition, power generation priority is given to the steam turbine (ST) and the power turbine (PT) so that allowable power output in accordance with the engine load percentage is output therefrom, and, with regard to the shaft generator motor (SGM), the output is suppressed by making it generate only a predetermined fraction of the allowable power output in accordance with the engine load percentage. In this way, by giving higher priority to the steam turbine (ST) and the power turbine (PT) than the shaft generator motor (SGM), exhaust heat recovery from the main engine 22 is maximized.

### {Power Turbine Control}

Next, control of the power turbine 23 will be described.

As shown in Fig. 3, for a target power-turbine-output value, the degree-of-opening of the exhaust-gas-amount adjusting valve B of the power turbine 23 is set in advance for each main-engine load percentage. In the figure, degree-of-opening maps for the exhaust-gas-amount adjusting valve B are shown for main-engine load percentages of 50%, 60%, and 100%. Maps like these are obtained in advance based on numerical calculations or actual measurements, and are stored in a memory of the control unit. In addition, instead of calculations with the maps, sequential calculations may be performed with mathematical models employing conversion factors.

Fig. 4 shows a control block diagram for performing control of the power turbine 23. On the basis of this control block diagram, a degree-of-opening command for the power turbine 23 is issued as follows, according to a flowchart in Fig. 5.

At the start of the process at Step S1 in Fig. 5, the degree-of-opening map (see Fig. 3) for the exhaust-gas-amount adjusting valve (control valve B), with which desired power-turbine output can be obtained, are obtained in advance based on numerical calculations or actual measurements for each main-engine load percentage.

Subsequently, in Step S3, a target power-turbine-output value is calculated at a power-generation-output command calculator 2. The target power-turbine-output value is obtained from the map shown in Fig. 2 in accordance with the main-engine load percentage and the inboard required power. The inboard required power is calculated from the current value and the voltage value obtained from the inboard system, as described above.

An actual power-turbine-output value is measured in Step S4, and a difference between the target power-turbine-output value and the actual power-turbine-output value is calculated at a subtractor 3. Then, a PID control calculation is performed at a PID controller 4 in Step S6 on the basis of a control difference obtained by the subtractor 3, and a feedback-control level (operation level) O₁ is derived.

In Step S7, on the basis of a rotational speed difference between a target power-turbine rotational speed and an actual power-turbine rotational speed, a feedback control level (operation level) O₂ is calculated at a degree-of-opening converter 1.

In Step S8, from the map shown in Fig. 3, the degree-of-opening for the exhaust-gas-amount adjusting valve B is obtained by using the target power-turbine output value and the main-engine load percentage obtained by a degree-of-opening calculator 5, and a feedforward control level (operation level) O₃ is determined.

Then, in Step S9, a sum of the feedback control level O₂ and the feedforward control level O₃ is obtained with an adder 6; the sum of the output result therefrom and the feedback control level O₁ is obtained with an adder 7; and a degree-of-opening command value for the exhaust-gas-amount adjusting valve B is finally determined.

By repeating the calculations of above-described Steps S3 to S9 at a predetermined control cycle, control of the power turbine 23 is performed according to fluctuations in the inboard required power.

Because the degree-of-opening of the exhaust-gas-amount control valve B is subjected to feedforward control on the basis of the inboard required power in this way, the responsiveness of the power turbine 23 with respect to the inboard required power can be improved, and, as a result, inboard surplus power can be reduced as much as possible.

### {Steam Turbine Control}

Next, control of the steam turbine will be described.

Similarly to the above-described exhaust-gas-amount adjusting valve B of the power turbine 23, feedforward control is performed for the degree-of-opening of the steam-amount adjusting valve E of the steam turbine 26.

Specifically, the degree-of-opening for the steam-amount adjusting valve E with respect to a target steam-turbine output value is obtained in advance in the same manner as in Fig. 3 for each main-engine load percentage and is stored in the memory of the control unit.

As in the control block diagram shown in Fig. 4, the target steam-turbine output value is obtained with the power-generation-output command calculation 2 from the main-engine load percentage and the inboard required power in accordance with the map in Fig. 2. A difference between the target steam-turbine output value and an actual steam-turbine output value is calculated by the subtractor 3, and the feedback control level (operation level) O₁ is calculated with the PID controller 4.

In addition, with the degree-of-opening calculator 5, the feedforward control level (operation level) O₃ for the degree-of-opening of the steam-amount adjusting valve E is obtained from the maps in Fig. 3 related to the steam turbine on the basis of the main-engine load percentage and the target steam-turbine output value. The adder 6 adds this feedforward control level O₃ to the feedback control level O₂, which is obtained with the degree-of-opening conversion 1 on the basis of the rotational speed difference between the target steam-turbine rotational speed and the actual steam-turbine rotational speed, and, additionally, the sum of the output result therefrom and the feedback control level O₁ is calculated by the adder 7. The degree-of-opening of the steam-amount adjusting valve E is determined in this way. By repeating the above-described degree-of-opening calculation at the predetermined control cycle, control of the steam turbine 26 is performed in correspondence with the fluctuations in the inboard required power.

Because the degree-of-opening of the steam-amount control valve E is subjected to feedforward control on the basis of the inboard required power in this way, responsiveness of the steam turbine 26 to the inboard required power can be improved, and, as a result, inboard surplus power can be reduced as much as possible.

As described above, the degree-of-opening control for the exhaust-gas-amount adjusting valve B of the power turbine 23 and the degree-of-opening control for the steam-amount adjusting valve E of the steam turbine 26 are independently performed in this embodiment.

However, because the response of a steam system is generally slow, commands for the power turbine may be generated by setting the steam-turbine control as a master and the power turbine as a slave. Specifically, when calculating the target power-turbine output value at the power-generation output command calculator 2 in Fig. 4, a steam-turbine load is taken into consideration. By doing so, the degree-of-opening of the exhaust-gas-amount adjusting valve B can be controlled while monitoring, at the power turbine side, a load on the steam turbine side, and the degree-of-opening commands for the control valves can be given so that the power turbine does not influence fluctuations in the surplus power.

### {Shaft Generator Motor Control}

Next, control of the shaft generator motor 35 will be described.

Because the responsiveness of the power turbine 23 and the steam turbine 26 to the inboard required power is improved, the exhaust-heat recovery type ship propulsion apparatus 1 shown in Fig. 1 can suppress the surplus power as much as possible. However, when the inboard required power abruptly decreases to or beyond a presumed level and relatively large surplus power is generated, assist torque from the shaft generator motor 35, which is driven by the surplus power acts as a disturbance, and a ship that should navigate at a fixed speed experiences an abrupt acceleration. Therefore, the following control is performed in this embodiment.

Fig. 6 shows a control block diagram for fuel-injection-amount control logic for a ship. In the figure, when a propeller rotational speed command is given in accordance with a propeller rotational speed required by a ship operator, the targeted required propeller rotational speed is converted to a fuel injection amount at a controller 41, and a fuel injection command is given.

On the other hand, when an amount of surplus power generated due to an abrupt reduction in the inboard required power is detected and the system is determined to be in a power surplus state (see Fig. 8 described later), a main engine output that corresponds to an output of the shaft generator motor 35 in accordance with a map A (see Fig. 7A described later) is calculated by a engine output calculator 45 shown in Fig. 6. Then, fuel injection amounts (converted fuel injection amounts) that correspond to the main-engine rotational speed and the main-engine output are calculated by using a map B (see Fig. 7B described later) at a fuel-injection-amount calculator 46 as a feedforward control level. The feedforward control levels for the fuel injection amount determined by the surplus power is transmitted to a subtractor 47 and is subtracted from the fuel injection command in the controller 41. The corrected fuel injection command from the subtractor 47 is given to the main engine 22. By applying the feedforward control in this way, a fuel injection amount that should be finally supplied to the main engine 22 is controlled.

Subsequently, the assist torque from the shaft generator motor 35 is added, and a rotational speed calculation is performed at a rotational speed calculator 43 for the rotational speed after a navigation load (for example, hull resistance) is subtracted on the basis of the output from an engine shaft sensor. An actual propeller output value, which is an output result therefrom, is fed back, and a difference with respect to the propeller rotational speed command value is calculated at a subtractor 44.

The feedforward control level for the fuel injection amount described above is calculated at the engine output calculator 45 and the fuel-injection-amount calculator 46 by using the map A and map B shown in Fig. 7A and Fig. 7B, respectively, which are created in advance. The map A in Fig. 7A is a map with which an engine output that corresponds to a motor output of a shaft generator motor 35 can be calculated and is represented as a two-dimensional map. In addition, the map B in Fig. 7B is a map with which fuel injection amounts (converted fuel injection amounts) that correspond to a main-engine rotational speed and a main-engine output can be calculated and is a three-dimensional map.

Because the motor output of the shaft generator motor 35 is directly detected in this way, the feedforward control level for the fuel injection amount can be calculated with the map A and map B shown in Fig. 7A and Fig. 7B. Note that, instead of the calculations with the maps, sequential calculations may be performed with mathematical models employing conversion factors.

With regard to the determination of the power surplus state where the feedforward control shown in Fig. 6 is started, the determination is made by power-surplus-state determining means shown in Fig. 8.

With the power-surplus-state determining means, the inboard required power is calculated first by using an inboard required power calculation 51, from the voltage and current values from the inboard system. This inboard required power calculation is similar to the inboard required power calculation used for controlling the power turbine 23 and the steam turbine 26 shown in Fig. 4.

On the other hand, the power supply in a ship in which the exhaust-heat recovery system is installed is the total output from the turbine generator 28, the shaft generator motor 35, and the power-generation diesel engines. Therefore, surplus power can be determined by subtracting the inboard required power from the total output. Then, the determined surplus power and a predetermined threshold are compared through a power-surplus-state determination 30; the system is determined to be in a power-surplus state when the surplus power exceeds the threshold; and the above-described controls shown in the Fig. 6 are started.

As described above, when surplus power is detected and the system is determined to be in a power surplus state, the fuel injection amount of the engine is controlled by using a fuel injection amount for the main engine, which corresponds to an output of the shaft generator motor 35 during the motor operation, as a feedforward control level so that a target propeller rotational speed is achieved, and thereby, fluctuations in ship speed can be suppressed even when the inboard required power abruptly decreases.

Note that, although a mechanically controlled engine in which fuel injection is mechanically controlled is employed as the main engine 22 in Fig. 6, an electronically controlled engine can also be suitably employed, as shown in Fig. 9. In this case, because the main engine 22 is an electronically controlled engine, conversion information for the fuel injection amount can be included in the controller 41. In this way, in the case in which the engine is an electronically controlled engine, the fuel injection information, which is surplus-power calculation results, can directly be input in advance to the controller 41, which is a governor of the engine, and, because it suffices to send a single control signal to an actuator, the system can be configured more simply.

Furthermore, in addition to the electronically controlled engine described by using Fig. 9, direct control may be performed, as shown in Fig. 10, so that a ship speed required by the ship operator is achieved.

As shown in Fig. 10, when commands are given in accordance with the propeller rotational speed and ship speed required by the ship operator, the targeted required propeller rotational speed and ship speed are converted to fuel injection amounts at the controller 41, and fuel-injection-amount commands are given to the engine 22. Because the main engine 22 is an electronically controlled engine, conversion information for the fuel injection amount and ship speed detected by a GPS or the like can be included in the controller 41. Accordingly, because target values for rotational speed as well as ship speed can be obtained at a rotational speed/ship speed calculator 48, the ship speed can be directly controlled so that a ship speed required by the ship operator is achieved.

As described above, with this embodiment, the degrees of opening for the power-turbine control valve B and the steam-turbine control valve E are subjected to feedforward control on the basis of the inboard required power; therefore, inboard surplus power can be made as small as possible.

Furthermore, even when inboard surplus power that is equal to or greater than a presumed level is generated due to an abrupt reduction in the inboard required power, because the fuel injection amount is corrected with the fuel injection amount (converted fuel injection amount) for the main engine 22 that corresponds to the output of the shaft generator motor 35 during the motor operation, ship speed fluctuations can be suppressed.

Note that although feedforward control is performed on the basis of the inboard required power for each of the power turbine 23 and the steam turbine 26 in this embodiment, the present invention is not limited to this, and the feedforward control of the present invention may be applied to one of the power turbine 23 and the steam turbine 26.

### {Reference Signs List}

- 1: exhaust-heat recovery type ship propulsion apparatus
- 21: exhaust gas turbine super charger
- 22: main engine
- 23: power turbine
- 25: steam turbine
- 28: turbine generator
- 35: shaft generator motor
- B: exhaust-gas-amount adjusting valve (power-turbine control valve)
- E: steam-amount adjusting valve (steam-turbine control valve)

## Claims

1. An exhaust-heat recovery type ship propulsion apparatus provided with
a main engine that drives a propulsion propeller of a ship;
a power turbine that is driven by exhaust gas from the main engine;
a steam turbine that is driven by steam generated by the exhaust gas from the main engine;
a turbine generator that is driven by the power turbine and the steam turbine; and
a shaft-generator motor that is provided between the main engine and the propulsion propeller and that is capable of a motor operation in which inboard surplus power is utilized to boost the main engine, as well as a power generation operation in which the shaft generator motor is driven by the main engine, thus generating power,
**characterized in that** the exhaust-heat recovery type ship propulsion apparatus comprises:
a power-turbine control unit that calculates, on the basis of inboard required power and a load on the main engine, a degree-of-opening for a power-turbine control valve that controls a flow volume of the exhaust gas to be supplied to the power turbine from the main engine as a feedforward degree-of-opening and that outputs the feedforward degree-of-opening to the power-turbine control valve; and/or
a steam turbine control unit that calculates, on the basis of the inboard required power and the load on the main engine, a degree-of-opening for a steam-turbine control valve that controls a flow volume of steam to be supplied to the steam turbine as a feedforward degree-of-opening and that outputs the feedforward degree-of-opening to the steam-turbine control valve; and
a fuel-injection-amount control unit that calculates a fuel injection amount for the main engine that corresponds to an output of the shaft generator motor during the motor operation as a converted fuel-injection amount and that subtracts the converted fuel-injection amount from the fuel injection amount to be supplied to the main engine.

2. A ship provided with the exhaust-heat recovery type ship propulsion apparatus according to Claim 1.

3. A control method for an exhaust-heat recovery type ship propulsion apparatus provided with
a main engine that drives a propulsion propeller of a ship;
a power turbine that is driven by exhaust gas from the main engine;
a steam turbine that is driven by steam generated by the exhaust gas from the main engine;
a turbine generator that is driven by the power turbine and the steam turbine; and
a shaft-generator motor that is provided between the main engine and the propulsion propeller and that is capable of a motor operation in which inboard surplus power is utilized to boost the main engine, as well as a power generation operation in which the shaft-generator motor is driven by the main engine, thus generating power,
wherein, on the basis of inboard required power and a load on the main engine, a degree-of-opening for a power-turbine control valve that controls a flow volume of the exhaust gas to be supplied to the power turbine from the main engine is calculated as a feedforward degree-of-opening, and the feedforward degree-of-opening is output to the power-turbine control valve; and/or, on the basis of the inboard required power and the load on the main engine, a degree-of-opening for a steam-turbine control valve that controls a flow volume of steam to be supplied to the steam turbine is calculated as a feedforward degree-of-opening, and the feedforward degree-of-opening is output to the steam-turbine control valve; and a fuel injection amount for the main engine that corresponds to an output of the shaft generator motor during the motor operation is calculated as a converted fuel-injection amount, and the converted fuel-injection amount is subtracted from the fuel injection amount to be supplied to the main engine.

## Patentansprüche

1. Schiffsantriebsvorrichtung mit Abgaswärmerückgewinnung, welche aufweist:
einen Hauptantrieb, der eine Antriebsschraube eines Schiffes antreibt;
eine Leistungsturbine, die von Abgas des Hauptantriebs angetrieben wird;
eine Dampfturbine, die von Dampf angetrieben wird, der aus dem Abgas des Hauptantriebs erzeugt wird;
einen Turbinengenerator, der durch die Leistungsturbine und die Dampfturbine angetrieben wird; und
einen Wellengenerator-Motor, der zwischen dem Hauptantrieb und der Antriebsschraube angeordnet ist, und der sowohl für einen Motorbetrieb, bei dem binnenbord-seitig vorhandene Überschussenergie verwendet wird, um den Hauptantrieb zu unterstützen, als auch für einen Energieerzeugungsbetrieb geeignet ist, bei dem der Wellengenerator-Motor von dem Hauptantrieb angetrieben wird, wodurch Energie erzeugt wird;
**dadurch gekennzeichnet, dass** die Schiffsantriebsvorrichtung mit Abgaswärmerückgewinnung aufweist:
eine Leistungsturbinen-Steuereinheit, die basierend auf der binnenbord-seitig benötigten Energie und einer an dem Hauptantrieb anliegenden Last einen Öffnungsgrad für ein Leistungsturbinen-Steuerventil, das ein Strömungsvolumen des Abgases steuert, das der Leistungsturbine von dem Hauptantrieb zuzuführen ist, als einen Vorsteuer-Öffnungsgrad berechnet, und den Vorsteuer-Öffnungsgrad an das Leistungsturbinen-Steuerventil ausgibt; und/oder
eine Dampfturbinen-Steuereinheit, die basierend auf der binnenbord-seitig benötigten Energie und der an dem Hauptantrieb anliegenden Last einen Öffnungsgrad für ein Dampfturbinen-Steuerventil, das ein Strömungsvolumen von Dampf steuert, welcher der Dampfturbine zuzuführen ist, als einen Vorsteuer-Öffnungsgrad berechnet, und den Vorsteuer-Öffnungsgrad an das Dampfturbinen-Steuerventil ausgibt; und
eine Steuereinheit für eine Treibstoffeinspritzmenge, die eine Treibstoffeinspritzmenge für den Hauptantrieb, die einer Ausgabe des Wellengenerator-Motors während des Motorbetriebs entspricht, als eine umgewandelte Treibstoffeinspritzmenge berechnet, und die umgewandelte Treibstoffeinspritzmenge von der Treibstoffeinspritzmenge abzieht, die dem Hauptantrieb zuzuführen ist.

2. Schiff, das die Schiffsantriebsvorrichtung mit Abgaswärmerückgewinnung nach Anspruch 1 aufweist.

3. Steuerungsverfahren für eine Schiffsantriebsvorrichtung mit Abgaswärmerückgewinnung, welche aufweist:
einen Hauptantrieb, der eine Antriebsschraube eines Schiffes antreibt;
eine Leistungsturbine, die von Abgas des Hauptantriebs angetrieben wird;
eine Dampfturbine, die von Dampf angetrieben wird, der aus dem Abgas des Hauptantriebs erzeugt wird;
einen Turbinengenerator, der durch die Leistungsturbine und die Dampfturbine angetrieben wird; und
einen Wellengenerator-Motor, der zwischen dem Hauptantrieb und der Antriebsschraube angeordnet ist, und der sowohl für einen Motorbetrieb, bei dem binnenbord-seitig vorhandene Überschussenergie verwendet wird, um den Hauptantrieb zu unterstützen, als auch für einen Energieerzeugungsbetrieb geeignet ist, bei dem der Wellengenerator-Motor von dem Hauptantrieb angetrieben wird, wodurch Energie erzeugt wird;
wobei basierend auf der binnenbord-seitig benötigten Energie und einer an dem Hauptantrieb anliegenden Last ein Öffnungsgrad für ein Leistungsturbinen-Steuerventil, das ein Strömungsvolumen des Abgases steuert, das der Leistungsturbine von dem Hauptantrieb zuzuführen ist, als ein Vorsteuer-Öffnungsgrad berechnet und der Vorsteuer-Öffnungsgrad an das Leistungsturbinen-Steuerventil ausgegeben wird; und/oder basierend auf der binnenbord-seitig benötigten Energie und der an dem Hauptantrieb anliegenden Last ein Öffnungsgrad für ein Dampfturbinen-Steuerventil, das ein Strömungsvolumen des Dampfes steuert, das der Dampfturbine zuzuführen ist, als ein Vorsteuer-Öffnungsgrad berechnet und der Vorsteuer-Öffnungsgrad an das Dampfturbinen-Steuerventil ausgeben wird; und eine Treibstoffeinspritzmenge für den Hauptantrieb, die einer Ausgabe des Wellengenerator-Motors während des Motorbetriebs entspricht, als eine umgewandelte Treibstoffeinspritzmenge berechnet wird, und die umgewandelte Treibstoffeinspritzmenge von der dem Hauptantrieb zuzuführenden Treibstoffeinspritzmenge abgezogen wird.

## Revendications

1. Appareil de propulsion de navire du type à récupération de chaleur à l'échappement muni
d'un moteur principal qui entraîne une hélice de propulsion d'un navire ;
d'une turbine de travail qui est entraînée par du gaz d'échappement du moteur principal ;
d'une turbine à vapeur qui est entraînée par de la vapeur générée par le gaz d'échappement du moteur principal ;
d'un turbogénérateur qui est entraîné par la turbine de travail et la turbine à vapeur ; et d'un moteur générateur à arbre qui est installé entre le moteur principal et l'hélice de propulsion et qui peut réaliser un fonctionnement de moteur dans lequel de la puissance excédentaire en-bord est utilisée pour booster le moteur principal, ainsi qu'un fonctionnement de génération de puissance dans lequel le moteur générateur à arbre est entraîné par le moteur principal, générant ainsi de la puissance,
**caractérisé en ce que** l'appareil de propulsion de navire du type à récupération de chaleur à l'échappement comprend :
une unité de commande de turbine de travail qui calcule, en fonction de la puissance requise en-bord et d'une charge sur le moteur principal, un degré d'ouverture pour une valve de commande de turbine de travail qui commande un volume d'écoulement du gaz d'échappement destiné à être fourni à la turbine de travail depuis le moteur principal en tant que degré d'ouverture par action directe et qui délivre en sortie le degré d'ouverture par action directe à la valve de commande de turbine de travail ; et/ou
une unité de commande de turbine à vapeur qui calcule, en fonction de la puissance requise en-bord et de la charge sur le moteur principal, un degré d'ouverture pour une valve de commande de turbine à vapeur qui commande un volume d'écoulement de vapeur destiné à être fourni à la turbine à vapeur en tant que degré d'ouverture par action directe et qui délivre en sortie le degré d'ouverture par action directe à la valve de commande de turbine à vapeur ; et
une unité de commande de quantité d'injection de carburant qui calcule une quantité d'injection de carburant pour le moteur principal qui correspond à une sortie du moteur générateur à arbre pendant le fonctionnement de moteur en tant que quantité d'injection de carburant convertie et qui soustrait la quantité d'injection de carburant convertie à la quantité d'injection de carburant destinée à être fournie au moteur principal.

2. Navire muni d'un appareil de propulsion de navire du type à récupération de chaleur à l'échappement selon la revendication 1.

3. Procédé de commande pour un appareil de propulsion de navire du type à récupération de chaleur à l'échappement muni
d'un moteur principal qui entraîne une hélice de propulsion d'un navire ;
d'une turbine de travail qui est entraînée par du gaz d'échappement du moteur principal ;
d'une turbine à vapeur qui est entraînée par de la vapeur générée par le gaz d'échappement du moteur principal ;
d'un turbogénérateur qui est entraîné par la turbine de travail et la turbine à vapeur ; et
d'un moteur générateur à arbre qui est installé entre le moteur principal et l'hélice de propulsion et qui peut réaliser un fonctionnement de moteur dans lequel de la puissance excédentaire en-bord est utilisée pour booster le moteur principal, ainsi qu'un fonctionnement de génération de puissance dans lequel le moteur générateur à arbre est entraîné par le moteur principal, générant ainsi de la puissance,
dans lequel, en fonction de la puissance requise en-bord et d'une charge sur le moteur principal, un degré d'ouverture pour une valve de commande de turbine de travail qui commande un volume d'écoulement du gaz d'échappement destiné à être fourni à la turbine de travail depuis le moteur principal est calculé en tant que degré d'ouverture par action directe, et le degré d'ouverture par action directe est délivré en sortie à la valve de commande de turbine de travail ; et/ou, en fonction de la puissance requise en-bord et de la charge sur le moteur principal, un degré d'ouverture pour une valve de commande de turbine à vapeur qui commande un volume d'écoulement de vapeur destiné à être fourni à la turbine à vapeur est calculé en tant que degré d'ouverture par action directe, et le degré d'ouverture par action directe est délivré en sortie à la valve de commande de turbine à vapeur ; et une quantité d'injection de carburant pour le moteur principal qui correspond à une sortie du moteur générateur à arbre pendant le fonctionnement de moteur est calculée en tant que quantité d'injection de carburant convertie, et la quantité d'injection de carburant convertie est soustraite à la quantité d'injection de carburant destinée à être fournie au moteur principal.
